# EUROPÄISCHE PATENTSCHRIFT

(11) **EP 3 802 981 B1**
(45) Veröffentlichungstag und Bekanntmachung des Hinweises auf die Patenterteilung: **11.10.2023**
(21) Anmeldenummer: 19742460.9
(22) Anmeldetag: 23.05.2019
(51) Int. Cl.: E04B 9/22, F21S 8/02, F21V 21/04, F24D 3/16, F24F 5/00

(54) **DECKENSTRAHLPLATTE MIT EINER BELEUCHTUNGSAUFNAHME, SOWIE VERWENDUNG EINES BELEUCHTUNGSELEMENTS MIT EINER SOLCHEN DECKENSTRAHLPLATTE**
RADIANT CEILING PANEL WITH A LIGHTING RECEPTACLE, AND USE OF A LIGHTING ELEMENT WITH SUCH A RADIANT CEILING PANEL
PANNEAU DE PLAFOND RAYONNANT AVEC LOGEMENT D'ÉCLAIRAGE, ET UTILISATION D'UN ÉLÉMENT D'ÉCLAIRAGE AVEC UN TEL PANNEAU DE PLAFOND RAYONNANT

(30) Priorität: 28.05.2018 CH 6682018
(43) Veröffentlichungstag der Anmeldung: 14.04.2021
(73) Patentinhaber: Zehnder Group International AG, 5722 Gränichen (CH)
(72) Erfinder: WESCHLE, Hans-Peter, 77743 Neuried (DE)
(74) Vertreter: Rentsch Partner AG
(86) Internationale Anmeldenummer: PCT/IB2019/054284
(87) Internationale Veröffentlichungsnummer: WO 2019/229598

(56) Entgegenhaltungen:
- EP-A1- 2 741 016
- WO-A1-2019/197991
- DE-U1-202015 101 209
- US-A1- 2016 178 145
- US-A1- 2017 175 961

## Beschreibung

Die Erfindung betrifft eine Deckenstrahlplatte, sowie die Verwendung eines Beleuchtungselements mit einer Deckenstrahlplatte.

Aus DE202015101209U1 ist eine Raumklimatisierungseinrichtung bekannt, welche mit zumindest einem Lüftungskanal und zumindest einem an diesem angeschlossenen, dem zu klimatisierenden Raum zugewandten Lüftungsdurchlass sowie wenigstens einer damit verbundenen Aufnahme in der zumindest ein Beleuchtungselement gehalten ist, dadurch gekennzeichnet, dass die Aufnahme für das Beleuchtungselement zum Lüftungskanal (1) offen ist.

Aus US2016178145A1 ist ein integriertes Decken- und Lichtsystem bekannt, das ein Lichtmodul in eine Deckenplatte oder eine vertikale Platte einbaut. In bestimmten Ausführungsformen kann das Lichtmodul direkt mit der Deckenplatte verbunden sein. Das Lichtmodul kann ein Gewicht pro Flächeneinheit haben, das geringer ist als ein Gewicht pro Flächeneinheit der Deckenplatte. Die Deckenplatte kann ein erstes Gewicht pro Volumeneinheit aufweisen, das größer ist als ein zweites Gewicht pro Volumeneinheit des daran gekoppelten Lichtmoduls, wodurch ein Durchhängen der Deckenplatte verhindert wird.

Aus US2017175961A1 sind Beleuchtungssysteme für die Innen- und Außenbeleuchtung von Gebäuden bekannt, die ein Lichtmodul, das aus einem wärmeleitenden Struktursubstrat gebildet wird, zusammen mit einer Beleuchtungskonfiguration, die direkt auf einer freiliegenden Oberfläche des Substrats durch Dickschichtdruckverfahren gebildet wird, umfassen. Das Substrat besteht aus einem hoch wärmeleitenden Material wie Aluminium oder einer Aluminiumlegierung und umfasst eine elektrisch isolierende Schicht, die direkt auf eine freiliegende Oberfläche des Substrats gedruckt und ausgehärtet ist, eine Schaltungsschicht, die direkt auf die isolierende Schicht gedruckt und ausgehärtet ist, und eine Vielzahl von LEDs, die elektrisch mit der Schaltungsschicht verbunden sind. Auf diese Weise wird jedes Lichtmodul als einteilige, verpackte Konstruktion für eine einfache Installation gebildet und soll die leitende Übertragung von Wärme weg von den LEDs für eine verbesserte Leistungseffizienz erleichtern. Die Deckenmodule sollen zudem elektrische und mechanische Verbindungsmöglichkeiten bieten, um ein selbsttragendes, integriertes Deckenraster zu bilden.

Aus WO2019197991A1 (im Stand der Technik gemäß Artikel 54(3) EPÜ) sind Deckenstrahlplatten-Anordnungen zur Anbringung im Deckenbereich eines Raumes bekannt, wobei die Anordnung mindestens eine erste Deckenstrahlplatte und eine zweite Deckenstrahlplatte zum Heizen und/oder Kühlen des Raumes sowie mindestens ein weiteres Funktionselement aufweist. Das mindestens eine weitere Funktionselement ist zwischen den mindestens zwei Deckenstrahlplatten angeordnet. Mindestens ein Verbindungselement hält die beiden Deckenstrahlplatten und das weitere Funktionselement zusammen.

Derartige Temperierkörper werden in Gestalt von Deckenstrahlplatten beispielsweise zur Erwärmung von Industriegebäuden, Büroräumen und dergleichen in Gestalt von Deckenstrahlplatten verwendet. An diesen Deckenstrahlplatten sind Beleuchtungselemente angebracht oder anbringbar, beispielsweise Leuchtstoffröhren. Eines oder mehrere Beleuchtungselemente können beispielsweise mit dem Temperierkörper verschraubt werden. Das ist allerdings aufwendig und kompliziert.

Es ist daher die Aufgabe der vorliegenden Erfindung, einen verbesserten Temperierkörper in Gestalt einer Deckenstrahlplatte bereitzustellen.

Zur Lösung der Aufgabe ist ein Temperierkörper in Gestalt einer Deckenstrahlplatte nach Anspruch 1 vorgesehen. In der folgenden Beschreibung ist der Begriff Temperierkörper so zu verstehen, dass er sich auf eine Deckenstrahlplatte bezieht.

Bei einer Deckenstrahlplatte gemäß der Erfindung ist vorgesehen, dass die Beleuchtungsaufnahme mindestens eine Hintergreiffläche zu einem Hintergriff durch eine Hintergreif-Kontur des mindestens einen Beleuchtungselements aufweist, so dass das in der Beleuchtungsaufnahme aufgenommene Beleuchtungselement bezüglich einer Kraftrichtung zur Frontseite des Temperierkörpers hin in der Beleuchtungsaufnahme gehalten ist.

Es ist dabei ein Grundgedanke, dass eine oder mehrere Hintergreifflächen an der Beleuchtungsaufnahme einen einfachen Hintergriff durch das Beleuchtungselement ermöglichen. Der Hintergriff ermöglicht zum Beispiel eine Steckmontage des Beleuchtungselements an der Beleuchtungsaufnahme.

Die Beleuchtungsaufnahme ist beispielsweise als ein Aufnahmekanal ausgestaltet. Die Beleuchtungsaufnahme kann stufige Konturen oder Kanten aufweisen, insbesondere sich parallel ihrer Längsachse erstreckende Konturen oder Kanten.

Die mindestens eine Hintergreiffläche erstreckt sich vorzugsweise parallel zu der Längsachse.

Die Hintergreiffläche hat also vorzugsweise eine Längsgestalt Somit ist beispielsweise eine Steckmontage des Beleuchtungselements in der Beleuchtungsaufnahme parallel oder quer zur Längsachse ohne weiteres möglich. Ein weiteres vorteilhaftes Konzept sieht vor, dass die mindestens eine Hintergreiffläche in Bezug auf die Frontseite des Temperierkörpers schräg geneigt ist. Es ist beispielsweise möglich, dass die Hintergreiffläche zur Frontseite des Temperierkörpers hin im Sinne einer Verengung der Beleuchtungsaufnahme verläuft. Die Hintergreiffläche kann beispielsweise von der Frontseite oder der Einstecköffnung oder Aufnahmeöffnung der Beleuchtungsaufnahme weg schräg im Sinne einer Aufweitung der Beleuchtungsaufnahme verlaufen.

Weiterhin möglich ist es, dass die mindestens eine Hintergreiffläche an einer Stufe der Beleuchtungsaufnahme vorgesehen ist. So kann beispielsweise eine Art Hinterschnitt an einer Stufe vorgesehen sein.

Gemäß der Erfindung umfasst die mindestens eine Hintergreiffläche einander gegenüberliegende Hintergreifflächen.

Zwischen den Hintergreifflächen ist ein Abstand vorhanden, in dem das Beleuchtungselement aufgenommen ist. Die einander gegenüberliegenden Hintergreifflächen können beispielsweise parallel zueinander verlaufen.

Die einander gegenüberliegenden Hintergreifflächen sind ausgehend von einer Frontseite der Beleuchtungsaufnahme voneinander weg schräg geneigt, so dass ein Abstand zwischen den Hintergreifflächen im Bereich der Frontseite größer ist als in einem größeren Abstand von der Frontseite. Zusätzlich oder alternativ bilden die Hintergreifflächen, die einander gegenüberliegen, eine Schwalbenschwanzkontur. Zusätzlich oder alternativ sind die einander gegenüberliegenden Hintergreifflächen gegensinnig zueinander schräg geneigt.

Bevorzugt ist es, wenn die Beleuchtungsaufnahme mindestens eine Durchtrittsöffnung für eine elektrische Leitung und/oder zur Belüftung des Beleuchtungselements aufweist. Die Durchtrittsöffnung kann beispielsweise an einer Bodenfläche oder Seitenfläche oder einer Nut der Beleuchtungsaufnahme angeordnet sein.

Bevorzugt ist es, wenn mehrere Durchtrittsöffnungen vorhanden sind, insbesondere in einer Reihenanordnung nebeneinander oder hintereinander angeordnete Durchtrittsöffnungen. Beispielsweise ist vorgesehen, dass die Durchtrittsöffnung einen Bestandteil einer Reihenanordnung von Durchtrittsöffnungen bildet. Die Reihenanordnung erstreckt sich insbesondere parallel zur Längsachse der Beleuchtungsaufnahme. Beispielsweise kann die Reihe von Durchtrittsöffnungen am Boden einer Nut oder Nutvertiefung der Beleuchtungsaufnahme vorgesehen sein.

Die Beleuchtungsaufnahme ist zweckmäßigerweise an einer Stirnseite des Temperierkörpers und/oder quer zur Frontseite des Temperierkörpers offen, so dass das Beleuchtungselement von der Stirnseite her oder quer zur Frontseite in die Beleuchtungsaufnahme entlang der Längsachse und/oder einer Steckachse einsteckbar ist. Die Stirnseite ist winkelig, insbesondere rechtwinkelig, zu der Frontseite.

Bevorzugt ist es, wenn der Temperierkörper aneinander entgegengesetzten Seiten oder Stirnseiten des Temperierkörpers offen ist und sich zwischen diesen entgegengesetzten Stirnseiten des Temperierkörpers erstreckt. Somit können ein oder mehrere Beleuchtungselemente von der jeweiligen Stirnseite her oder von beiden Stirnseiten her des Temperierkörpers her in die Beleuchtungsaufnahme eingesteckt werden.

Weiterhin ist es vorteilhaft, wenn die Beleuchtungsaufnahme eine sich entlang der Längsachse erstreckende Längsgestalt zur Aufnahme mindestens zweier Beleuchtungselemente in Bezug auf die Längsachse hintereinander aufweist. Bevorzugt ist es, wenn weitere Beleuchtungselemente, beispielsweise drei oder vier Beleuchtungselemente, entlang der Längsachse in die Beleuchtungsaufnahme einbringbar, insbesondere einsteckbar sind.

Weiterhin ist es vorteilhaft, wenn die Beleuchtungsaufnahme einander gegenüberliegende, parallel zur Längsachse verlaufende Seitenwände aufweist. Die Seitenwände dienen beispielsweise zum formschlüssigen Halten des mindestens einen Beleuchtungselements. Beispielsweise sind die Seitenwände rechtwinkelig zu einer Frontseite oder Frontfläche des Temperierkörpers. Es ist aber auch möglich, dass die Seitenwände eine Schrägneigung aufweisen, beispielsweise eine Schrägneigung von Randbereichen der Beleuchtungsaufnahme, die parallel zur Längsachse verlaufen, zueinander hin.

Eine oder beide der Seitenwände können als Hintergreifflächen ausgestaltet sein oder eine Hintergreiffläche aufweisen. Es ist aber auch möglich, dass die mindestens eine Hintergreiffläche abseits der Seitenwände ist, beispielsweise im Bereich eines Bodens oder einer Nut am Boden der Beleuchtungsaufnahme.

Die Beleuchtungsaufnahme weist vorteilhaft eine Bodenfläche auf, an der mindestens eine Nut angeordnet ist. Die Nut kann beispielsweise eine Durchtrittsöffnung für eine elektrische Leitung aufweisen. Die oder eine Durchtrittsöffnung kann aber auch zur Belüftung des mindestens einen Beleuchtungselements dienen. Bevorzugt ist eine Reihenanordnung mehrerer Durchtrittsöffnungen, die sich am Nutboden oder den Seitenwänden der Nut befindet.

Es können Durchtrittsöffnungen gleicher Geometrie oder unterschiedlicher Geometrie vorgesehen sein, beispielweise unterschiedlicher Größe und/oder unterschiedlicher Innenumfangskontur, insbesondere ovale oder runde Durchtrittsöffnungen.

Nicht oder nicht vollständig für den Durchtritt von elektrischen Leitungen genutzte Durchtrittsöffnungen können als Belüftungsöffnungen dienen.

Die mindestens eine Nut verläuft vorzugsweise parallel zur Längsachse der Beleuchtungsaufnahme. Die mindestens eine Nut kann aber auch quer, insbesondere rechtwinkelig quer, zur Längsachse der Beleuchtungsaufnahme verlaufen.

Insbesondere ist es vorteilhaft, wenn an der Nut mindestens eine der Hintergreifflächen angeordnet ist. Insbesondere ist es vorteilhaft, wenn die Nut einen Bestandteil einer Schwalbenschwanzkontur bildet. Beispielsweise können einander gegenüberliegende Seitenwände, die sich vom Boden der Nut weg erstrecken, als Hintergreifflächen ausgestaltet sein. Es versteht sich, dass lediglich eine der Seitenwände eine Hintergreiffläche darstellen muss, während die andere Seitenwand beispielsweise keine Hintergreiffläche darstellt.

Der Temperierkörper weist zweckmäßigerweise eine Temperieranordnung auf. Die Temperieranordnung dient zur Heizung und/oder Kühlung der Umgebung des Temperierkörpers. Die Temperieranordnung bildet vorteilhaft einen mit dem Temperierkörper fest verbundenen oder lösbar an dem Temperierkörper angeordneten Bestandteil des Temperierkörpers. Die Temperieranordnung umfasst beispielsweise Fluidkanäle oder Fluidrohre oder ist dadurch gebildet. Beispielsweise sind die Fluidkanäle oder Fluidrohre von einem Temperierfluid, insbesondere Wasser, durchströmt oder durchströmbar. Die Temperieranordnung kann aber auch beispielsweise eine elektrische Temperieranordnung sein oder umfassen. Beispielsweise kann die Temperieranordnung elektrische Heizleitungen und/oder Kühlleitungen, Heizflächenkörper und/oder Kühlflächenkörper umfassen oder dadurch gebildet sein. Fluidrohre oder Fluidleitungen oder elektrische Heizleitungen oder Kühlleitungen bilden beispielsweise Temperierstränge der Temperieranordnung.

Die Beleuchtungsaufnahme ist zweckmäßigerweise an einem Beleuchtungsprofilkörper angeordnet, der mit mindestens einem Temperierprofilkörper verbunden oder verbindbar ist. An dem Temperierprofilkörper ist der Temperierabschnitt ganz oder teilweise vorgesehen. Der Temperierprofilkörper bildet einen Träger für die Temperieranordnung, beispielsweise deren Fluidkanäle oder Fluidrohre, elektrische Heizleitungen oder Kühlleitungen oder dergleichen. Die Temperieranordnung ist an oder auf dem Temperierprofilkörper angeordnet oder anordenbar. Es ist möglich, dass der Temperierprofilkörper nachträglich mit der Temperieranordnung versehen wird.

Es ist auch möglich, dass der Temperierprofilkörper integral eines oder mehrere Fluidrohre der Temperieranordnung aufweist und somit die Temperieranordnung ganz oder teilweise bildet.

Der Temperierprofilkörper weist vorzugsweise mindestens eine Tragfläche oder Tragwand zum Tragen der Temperieranordnung auf. Die Tragfläche oder Tragwand erstreckt sich vorzugsweise bezüglich der Längsachse des Temperierprofilkörpers und/oder des Beleuchtungsprofilkörpers. Die Tragwand oder Tragfläche ist vorzugsweise plattenartig. Eine Querbreite der Tragfläche oder Tragwand quer zur Längsachse ist vorzugsweise so bemessen, dass mindestens zwei, vorzugsweise drei oder vier Fluidkanäle oder Fluidrohre oder sonstige Temperierstränge in einer Reihenanordnung nebeneinander quer zur Längsachse mit Abstand zueinander anordenbar oder angeordnet sind.

Der Temperierprofilkörper weist beispielsweise eine muldenartige oder wannenartige Aufnahme oder einen Aufnahmekanal für die Temperieranordnung auf. Die Aufnahme oder der Aufnahmekanal verlaufen zweckmäßigerweise parallel zur Längsachse des Temperierprofilkörpers und/oder des Beleuchtungsprofilkörpers.

Bevorzugt ist es, wenn der Temperierprofilkörper an seinen Stirnseiten offen ist oder jedenfalls Durchtrittsöffnungen für die Fluidkanäle oder Fluidrohre aufweist.

Der Beleuchtungsprofilkörper und der mindestens eine Temperierprofilkörper sind vorzugsweise in Bezug auf ihre Längsachsen gleich lang. Bei dieser Konfiguration fluchten die Stirnseiten von Temperierprofilkörper und Beleuchtungsprofilkörper miteinander. Es ist aber auch möglich, dass beispielsweise der Beleuchtungsprofilkörper kürzer als der Temperierprofilkörper ist oder umgekehrt. Beispielsweise kann also der Beleuchtungsprofilkörper beispielsweise hinter eine Stirnseite des Temperierprofilkörpers zurückstehen oder vor die Stirnseite des Temperierprofilkörpers vorstehen.

Bevorzugt ist weiterhin, wenn der Beleuchtungsprofilkörper mindestens eine Halterung, beispielsweise eine Halteaufnahme oder einen Haltevorsprung, für den Temperierprofilkörper aufweist. So kann beispielsweise ein Seitenschenkel des Beleuchtungsprofilkörpers eine Halterung für den Temperierprofilkörper aufweisen oder als Halterung ausgestaltet sein. An dem Seitenschenkel können beispielsweise quer zur Längsachse verlaufende Hakenvorsprünge oder Hakenaufnahmen zum Verhaken mit dem Temperierprofilkörper vorgesehen oder ausgebildet sein.

Der Beleuchtungsprofilkörper kann einen Träger für den Temperierprofilkörper bilden. Es ist aber auch umgekehrt möglich, dass der Beleuchtungsprofilkörper an dem Temperierprofilkörper gehalten ist. Der Temperierprofilkörper bildet vorzugsweise bei dieser Ausgestaltung eine Halterung oder einen Träger für den Beleuchtungsprofilkörper.

An dem Beleuchtungsprofilkörper ist zweckmäßigerweise ein Aufnahmekanal zur Aufnahme mindestens einer elektrischen Leitung zwischen der Halterung, insbesondere der Halteaufnahme oder dem Haltevorsprung, und der Beleuchtungsaufnahme angeordnet. Somit können beispielsweise elektrische Leitungen, Datenkabel oder dergleichen in dem Aufnahmekanal aufgenommen sein. Die Leitungen können sozusagen neben der Beleuchtungsaufnahme verlaufen.

Weiterhin ist es vorteilhaft, wenn der Temperierkörper mindestens eine Befestigungshalterung zur Aufnahme eines Befestigungskörpers aufweist, mit dem der Temperierkörper an einer Wandfläche oder Deckenfläche des Raumes befestigbar ist. Die Befestigungshalterung ist vorzugsweise an dem bereits erwähnten Temperierprofilkörper angeordnet. Beispielsweise ist die Befestigungshalterung durch eine Hintergreiffläche gebildet oder weist eine Hintergreiffläche auf.

Die Befestigungshalterung hat vorzugsweise eine Längsgestalt und erstreckt sich parallel zur Längsachse der Beleuchtungsaufnahme. Es ist möglich, dass sich die Befestigungshalterung über die gesamte Länge des Temperierkörpers oder des Beleuchtungsprofilkörpers erstreckt.

Der Temperierkörper, insbesondere der Beleuchtungsprofilkörper, kann mehrere Befestigungshalterungen aufweisen, beispielsweise in einer Reihenanordnung hintereinander angeordnete Befestigungshalterungen. Die Reihenanordnung kann beispielsweise quer oder parallel zur Längsachse der Beleuchtungsaufnahme oder des Temperierkörpers verlaufen.

Es ist auch möglich, dass mehrere Befestigungshalterungen, insbesondere in einer Reihe hintereinander angeordnete Befestigungshalterungen, vorgesehen sind. Die Reihe verläuft vorzugweise parallel zur Längsachse der Beleuchtungsaufnahme oder des Beleuchtungsprofilkörpers.

Wenn die Befestigungshalterung an dem Beleuchtungsprofilkörper angeordnet ist, kann dieser seinerseits wiederum einen Träger oder eine Tragaufnahme zum Tragen des Temperierprofilkörpers bilden.

Weiterhin vorteilhaft ist es, wenn an dem Beleuchtungsprofilkörper aneinander entgegensetzten Seiten jeweils eine Halterung, beispielsweise eine Halteaufnahme oder ein Haltevorsprung, für den Temperierprofilkörper vorgesehen ist.

Der Temperierkörper besteht vorzugsweise aus Metall und/oder Kunststoff.

Insbesondere ist es vorteilhaft, wenn der Temperierprofilkörper aus Metall besteht.

Der Beleuchtungsprofilkörper kann aus Metall, aber ohne weiteres auch aus Kunststoff oder aus beidem bestehen. Auf eine thermische Leitfähigkeit des Beleuchtungsprofilkörpers kommt es nicht unbedingt an.

Es ist möglich, dass der Temperierprofilkörper und der Beleuchtungsprofilkörper gleiche thermische Leitfähigkeiten und/oder gleiche Materialien aufweisen.

Vorteilhaft ist es, wenn eine thermische Leitfähigkeit des Temperierprofilkörpers größer als eine thermische Leitfähigkeit des Beleuchtungsprofilkörpers ist.

Weiterhin vorteilhaft ist es, wenn der Temperierkörper mindestens ein Beleuchtungselement aufweist.

Der Temperierkörper kann mindestens ein an der Beleuchtungsaufnahme lösbar gehaltenes Abdeckelement zur Abdeckung zumindest einen Teilabschnitts der Beleuchtungsaufnahme aufweisen. Möglich ist also auch ein System umfassend einen Temperierkörper, das Abdeckelement und das Beleuchtungselement. Mit dem Abdeckelement kann beispielsweise ein solcher Teilabschnitt der Beleuchtungsaufnahme abgedeckt werden, in dem keine Beleuchtungsaufnahme angeordnet ist. Somit ist eine optische ansprechende Gestaltung möglich.

Das Abdeckelement kann aber auch eine Abdeckung und/oder einen Träger für eine elektrische Versorgungsleitung, die zur Versorgung des mindestens einen Beleuchtungselements dient, sein oder bilden.

Es ist vorteilhaft, wenn das Abdeckelement eine parallel zur Längsachse der Beleuchtungsaufnahme verlaufende Durchtrittsöffnung für eine elektrische Versorgungsleitung zur Versorgung des mindestens einen Beleuchtungselements aufweist. Mithin ist also das Abdeckelement parallel zur Längsachse der Beleuchtungsaufnahme stirnseitig vorteilhaft offen oder weist dort eine Öffnung für die elektrische Versorgungsleitung auf.

Das Abdeckelement weist beispielsweise einen Grundschenkel, der die Beleuchtungsaufnahme quer zur Längsachse überdeckt, auf. Bevorzugt ist das Abdeckelement aus einem einstückigen Abdeckkörper, insbesondere einem Profilkörper, gebildet.

Weiterhin ist es vorteilhaft, wenn das Abdeckelement mindestens eine Klemmkontur zum Verklemmen mit der mindestens einen Beleuchtungsaufnahme aufweist. Das Abdeckelement kann also in der Beleuchtungsaufnahme verklemmt werden. Die Verklemmung kann beispielsweise durch federnd belastete Seitenwände des Abdeckelements realisiert sein, die sich von einer Grundwand des Abdeckelements weg erstrecken. Beispielsweise sind die Seitenwände zu der Grundwand winkelig, insbesondere etwa rechtwinkelig.

Weiterhin ist es möglich, dass das Abdeckelement mindestens eine Hintergreif-Kontur zum Hintergreifen der mindestens einen Hintergreiffläche aufweist. In Bezug auf die Hintergreif-Kontur ist also das Abdeckelement vorzugsweise gleich oder gleichartig wie das Beleuchtungselement ausgestaltet.

Zur Nutzung an der Deckenstrahlplatte ist erfindungsgemäß ein Beleuchtungselement vorgesehen, welches mindestens ein Leuchtmittel sowie mindestens eine Hintergreif-Kontur zum Hintergreifen der mindestens einen Hintergreiffläche der Beleuchtungsaufnahme aufweist. Das Beleuchtungselement weist zweckmäßigerweise aneinander entgegengesetzten Seiten elektrische Anschlüsse oder Leitungen auf, mit denen das Beleuchtungselement mit einem weiteren Beleuchtungselement in Reihe schaltbar ist. Die in Reihe geschalteten Beleuchtungselemente können beispielsweise in der Beleuchtungsaufnahme eines oder mehrerer Temperierkörper aufgenommen sein. Beispielsweise können zwei Temperierkörper bezüglich der Längsachse der Beleuchtungsaufnahme miteinander fluchtend oder koaxial sein, sodass ein Beleuchtungselement in den Beleuchtungsaufnahmen beider Temperierkörper aufgenommen sein kann.

Zu dem Temperierkörper ist noch zu erwähnen, dass dieser vorteilhaft einen Bestandteil einer Reihenanordnung mindestens zweier Temperierkörper aufweist, die in Reihe hintereinander anordenbar sind. Bevorzugt sind die Temperierkörper quer zur Längsachse der Beleuchtungsaufnahme konturgleich. Insbesondere sind die Konturen der Beleuchtungsaufnahme der Temperierkörper quer zur Längsachse geometrisch gleich.

Somit ist es möglich, dass ein Beleuchtungselement übergreifend in die Beleuchtungsaufnahme zweier hintereinander angeordneter Temperierkörper aufgenommen ist. Mithin ist also das Beleuchtungselement in Eingriff mit Beleuchtungsaufnahmen zweier hintereinander in Richtung der Längsachse angeordneter Temperierkörper. Das Beleuchtungselement weist vorzugsweise einen Grundkörper auf, an dem die Hintergreif-Kontur unbeweglich angeordnet ist. Somit ist beispielsweise die bereits erwähnte Steckmontage ohne weiteres möglich, die von einer Stirnseite des Temperierkörpers her erfolgt.

Es ist aber auch möglich, dass die Hintergreif-Kontur an einem Rastkörper zum Verrasten mit der Hintergreiffläche vorgesehen ist. So können beispielsweise Seitenwände oder Seitenschenkel des Beleuchtungselements oder eines Grundkörpers des Beleuchtungselements federnd nachgiebig quer zur Längsachse sein, so dass das Beleuchtungselement quer zur Längsachse von einer Frontseite der Beleuchtungsaufnahme her in dieselbe einsteckbar ist.

Weiterhin ist es vorteilhaft, wenn das Beleuchtungselement mindestens eine Klemmkontur, beispielsweise einen federnden Klemmschenkel, zum Verklemmen mit der Beleuchtungsaufnahme aufweist.

In Bezug auf die Hintergreif-Konturen ist noch zu erwähnen, dass sie vorzugsweise komplementär zu den Hintergreifflächen der Beleuchtungsaufnahme sind. Beispielsweise sind also die Hintergreif-Konturen in der Art einer Schwalbenschwanzkontur in einer Ausführungsform der Erfindung ausgestaltet. Weiterhin ist es vorteilhaft, wenn die Hintergreif-Konturen eine Schrägneigung, insbesondere eine gegensinnige Schrägneigung, zueinander aufweisen. Die Hintergreif-Konturen verlaufen beispielsweise gegensinnig voneinander weg schräg geneigt von einem Grundkörper des Beleuchtungselements aus.

Die Hintergreif-Konturen können aber auch beispielsweise durch eine Nutvertiefung an einer Seitenfläche, die parallel zur Längsachse der Beleuchtungsaufnahme oder des Grundkörpers des Beleuchtungselements verläuft, des Grundkörpers des Beleuchtungselements angeordnet sein. Weiterhin können an Seitenflächen des Grundkörpers des Beleuchtungselements, die am Temperierkörper montierten Zustand parallel zur Längsachse verlaufen, Hintergreifvorsprünge als Hintergreif-Konturen zum Eingriff in die Beleuchtungsaufnahme oder zum Hintergriff mit den Hintergreifflächen vorgesehen sein.

Nachfolgend werden Ausführungsbeispiele der Erfindung anhand der Zeichnung erläutert. Es zeigen:
- Figur 1: eine perspektivische Schnittdarstellung eines Temperierkörpers etwa entlang einer Schnittlinie A-A in Figur 2,
- Figur 2: den Temperierkörper gemäß Figur 1 in perspektivischer Schrägdarstellung,
- Figur 3: eine Reihenanordnung zweier Beleuchtungselemente zur Verwendung in dem Temperierkörper gemäß Figuren 1, 2,
- Figur 4: eine perspektivische Schrägansicht eines Beleuchtungsprofilkörpers des Temperierkörpers gemäß Figuren 1, 2,
- Figur 5: eine perspektivische Schrägansicht von unten oder von der Seite einer Anordnung mehrere Temperierkörper, die als Seitenwand oder Decke eines Raumes ausgestaltet sind,

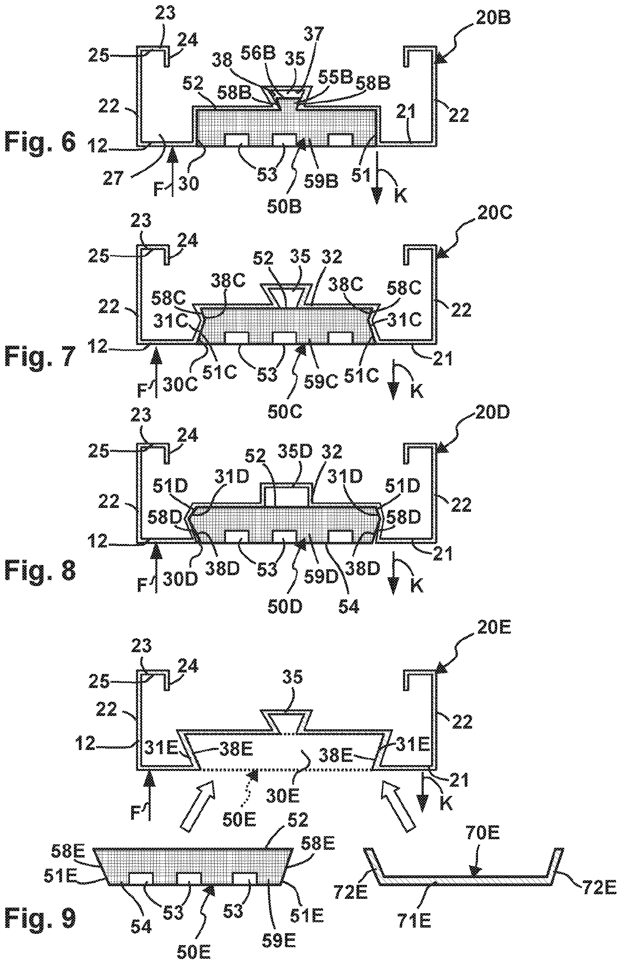

- Figur 6: eine Variante des Beleuchtungsprofilkörpers gemäß Figuren 1, 4 mit einem Beleuchtungselement in Schnittdarstellung etwa entlang der Schnittlinie A-A in Figur 2,
- Figur 7: eine weitere Variante des Beleuchtungsprofilkörpers gemäß Figuren 1, 4 mit einem Beleuchtungselement in Schnittdarstellung etwa entlang der Schnittlinie A-A in Figur 2,
- Figur 8: eine weitere Variante des Beleuchtungsprofilkörpers gemäß Figuren 1, 4 mit einem Beleuchtungselement in Schnittdarstellung etwa entlang der Schnittlinie A-A in Figur 2, und
- Figur 9: einen weiteren Beleuchtungsprofilkörper im Querschnitt mit einem Beleuchtungselement oder einem Abdeckelement, die wahlweise in seiner Beleuchtungsaufnahme anordenbar sind.

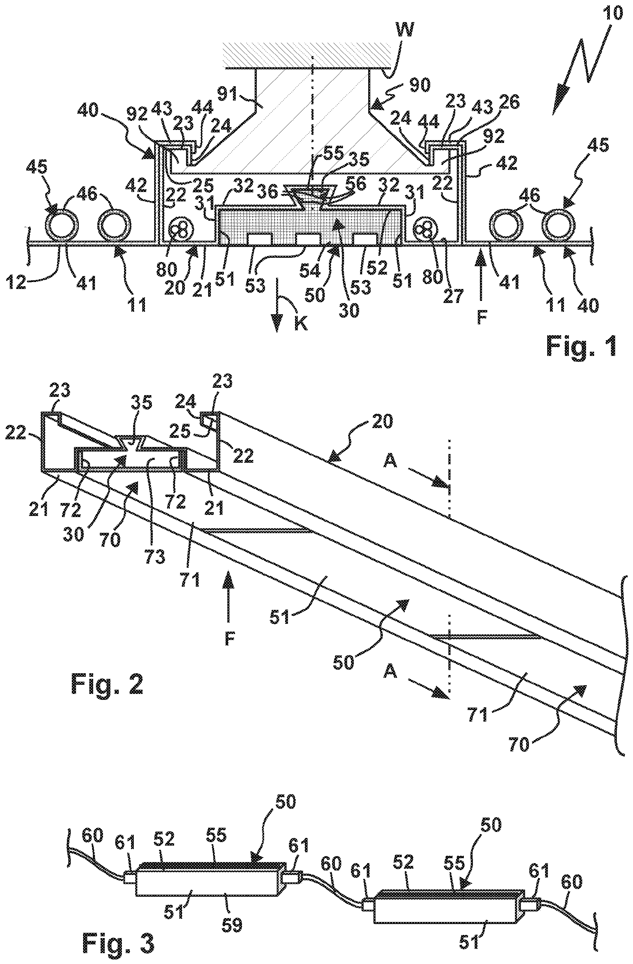

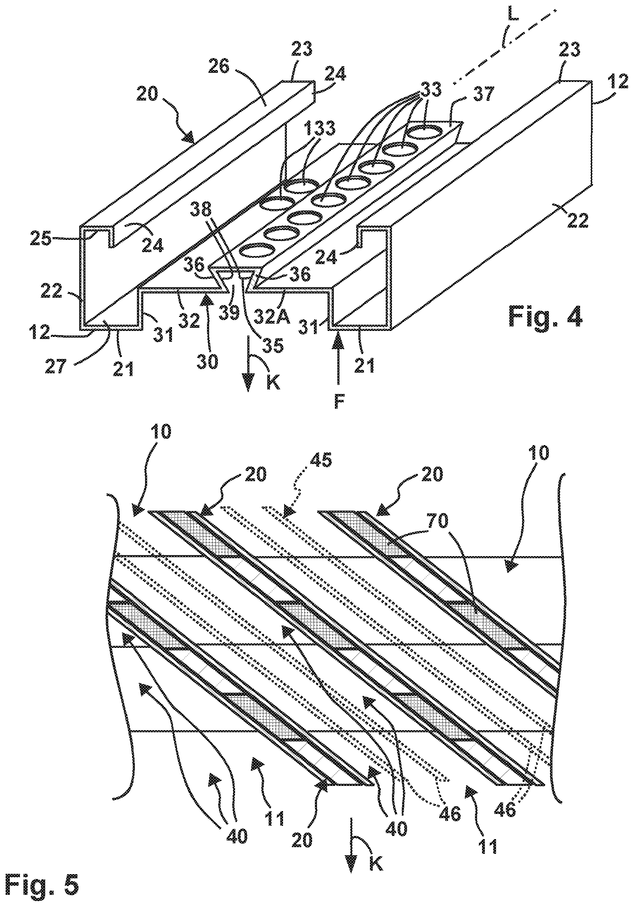

Ein Temperierkörper 10 gemäß der Zeichnung kann mit weiteren Temperierkörpern 10 weist einen Beleuchtungsprofilkörper 20 sowie einen oder mehrere neben dem Beleuchtungsprofilkörper 20 angeordnete Temperierprofilkörper 40 auf. Beispielsweise ist der Beleuchtungsprofilkörper 20 zwischen zwei Temperierprofilkörpern 40 angeordnet und mit diesen verbunden. Es ist auch möglich, dass der Beleuchtungsprofilkörper 20 einen Temperierprofilkörper trägt und der in Figur 1 dargestellte andere Temperierprofilkörper 40 einen Bestandteil eines anderen Temperierkörpers 10 bildet. Weiterhin ist es möglich, dass der Temperierkörper 10 mehrere Beleuchtungsprofilkörper 20 und mehrere Temperierprofilkörper 40 aufweist, beispielsweise in der Anordnung gemäß Figur 5.

Der Temperierprofilkörper 40 weist eine Tragwand 41 auf, von der Seitenschenkel oder Halteschenkel 42 winkelig, beispielsweise rechtwinkelig abstehen.

Auch der Beleuchtungsprofilkörper 20 weist eine derartige Grund-Kontur auf, nämlich eine Tragwand 21, von der Seitenschenkel oder Halteschenkel 22 seitlich oder winkelig abstehen.

Die Seitenschenkel 22, 42 können nebeneinander, insbesondere mit ihren Flachseiten aneinander liegend angeordnet werden. Möglich wäre es, dass beispielsweise Schrauben oder dergleichen andere Verbindungselemente durch die Seitenschenkel 22, 42 hindurch den Temperierprofilkörper 40 und den Beleuchtungsprofilkörper 20 miteinander verbinden. Auch eine Klebeverbindung oder Schweißverbindung zwischen den aneinander gegenüberliegenden Wandflächen der Seitenschenkel 22, 42 ist möglich.

Vorliegend ist jedoch eine Verhakung bzw. ein Einhängen des einen Profilkörpers 20, 40 an dem anderen Profilkörper 40, 20 gegeben.

Beispielsweise weist der Beleuchtungsprofilkörper Tragschenkel 23 auf, die an den Seitenschenkeln 22 angeordnet sind und sich von diesen weg in Richtung der Tragwand 21 erstrecken. An den Tragschenkeln 23 sind noch weiterhin Widerlagerschenkel 24 angeordnet, die von den Tragschenkeln 23 winkelig abstehen, vorliegend in Richtung der Tragwand 21. Die Schenkel 22, 23, 24 sind vorliegend rechtwinkelig zueinander orientiert. Die Seitenschenkel 22 stehen rechtwinkelig von der Tragwand 21 ab. Selbstverständlich wären auch andere Winkelstellungen möglich, wobei es vorteilhaft ist, wenn ein Gesamtwinkel, mit dem ein Seitenschenkel 22 von der Tragwand 21 absteht und der Seitenschenkel 42 von der Tragwand 41 absteht insgesamt ca. 180° ist, so dass die Seitenschenkel 22, 42 auch dann, wenn diese nicht rechtwinkelig von der Tragwand 21, 41 abstehen, flächig aneinander liegen können.

Die Tragschenkel 23 sowie die Widerlagerschenkel 24 bilden eine Halterung 26 für den Temperierprofilkörper 40. Der Temperierprofilkörper 40 kann auf einen Tragschenkel 23 aufgelegt werden und mit dem Widerlagerschenkel 24 verhakt werden.

Der Temperierprofilkörper 40 weist von den Seitenschenkeln 42 winkelig abstehende Tragschenkel 43 auf, wobei die Tragschenkel 43 von der Tragwand 41 weg orientiert sind. Die Tragschenkel 43 sind zur Auflage auf den Tragschenkeln 23 des Beleuchtungsprofilkörpers 20 vorgesehen. Von dem Tragschenkel 43 steht jeweils noch ein Widerlagerschenkel 44 ab. Mithin begrenzen der Widerlagerschenkel 44, der Tragschenkel 43 und der Seitenschenkel 42 eine U-förmige Aufnahme, beispielsweise eine Art Hakenaufnahme, in die die Halterung 26 eingreift. Die Halterung 26 wird von den von der Tragwand 21 abgewandten Außenseiten des Seitenschenkels 22, des Tragschenkels 23 und des Widerlagerschenkels 24 gebildet. Somit kann also der Temperierprofilkörper 40 an der Halterung 26 sozusagen verhakt werden.

Zudem begrenzen der Seitenschenkel 22, der Tragschenkel 23 und der Widerlagerschenkel 24 eine U-förmige Aufnahme für eine Befestigungshalterung 25. Die Befestigungshalterung 25 dient zur Befestigung des Temperierkörpers 10 an einer Wandfläche W. Dazu ist beispielsweise ein Befestigungskörper 90 vorgesehen, der mit der Wandfläche W verbunden ist oder verbindbar ist, beispielsweise verschraubt, verklebt oder dergleichen. Der Befestigungskörper 90 bildet beispielsweise einen Bestandteil einer Deckenhalterung oder einer Wandhalterung, mit der der Temperierkörper 10 an der Wandfläche W befestigbar ist.

Der Befestigungskörper 90 weist eine Befestigungsbasis 91 mit der Wandfläche W auf, von der seitlich Stützvorsprünge 92 abstehen. Die Stützvorsprünge 92 sind beispielsweise in der Art von Haken oder Hakenvorsprüngen ausgestaltet. Die Stützvorsprünge 92 sind aneinander entgegengesetzten Seiten der Befestigungsbasis 91 angeordnet. Die Stützvorsprünge 92 greifen in die Befestigungshalterungen 25 an den einander gegenüberliegenden Seitenschenkeln 22 ein.

Möglich ist es beispielsweise, dass der Beleuchtungsprofilkörper 20 mit seiner Stirnseite 12 bzw. der Stirnseite 12 des Temperierkörpers 10 auf den Befestigungskörper 90 aufgesteckt wird, der dann in den Zwischenraum zwischen den Seitenschenkeln 22 eingreift und mit seinen Stützvorsprüngen 92 in die Befestigungshalterung 25 eingreift. Es ist aber auch möglich, dass beispielsweise Haken oder dergleichen andere Befestigungselemente an der Wand W befestigt werden, die ihrerseits wiederum in die Befestigungsaufnahmen oder Befestigungshalterungen 25 eingreift.

Bei der gewählten Konstruktion stützt sich also der Beleuchtungsprofilkörper 20 direkt auf den Stützvorsprung 92 ab. An diesen Stützbereichen ist zudem der Temperierprofilkörper 40 angeordnet, der sich somit an Bereichen des Beleuchtungsprofilkörpers 20 an demselben abstützt, die ihrerseits an den Stützvorsprüngen 92 bzw. am Befestigungskörper 90 abgestützt sind. Somit ist eine optimale Krafteinleitung des Beleuchtungsprofilkörpers 20 und des Temperierprofilkörpers 40 auf den Befestigungskörper 90 möglich.

Die Temperierprofilkörper 40 sind nämlich in der Praxis stark durch Gewicht belastet, nämlich durch eine Temperieranordnung 45. Die Temperierprofilkörper 40 und die Temperieranordnung 45 befinden sich an Temperierabschnitten 11 des Temperierkörpers 10. Die Temperieranordnung 45 umfasst beispielsweise ein oder mehrere Temperierstränge 46, insbesondere Fluidrohre, die von einem Temperierfluid, beispielsweise Wasser, zur Kühlung oder Erwärmung, mithin zur Temperierung, eines Raums durchströmbar sind. Man erkennt, dass insbesondere durch das Wasser, welches die Temperierstränge 46 durchströmt, eine hohe Gewichtsbelastung vorhanden ist, die jedoch durch die Anordnung und die Abstützung der Temperierprofilkörper 40 am Beleuchtungsprofilkörper 20 und Befestigungskörper 90 optimal abgestützt ist.

Der Temperierkörper 10 dient also primär zur Temperierung, also Kühlung und/oder Erwärmung, eines Raumes, an dem die Wandfläche W vorgesehen ist. Zudem hat er auch noch eine optionale Beleuchtungsfunktion, wie nachfolgend deutlicher wird. Diese Beleuchtungsfunktion kann bei Bedarf sozusagen aktiviert werden, indem eines oder mehrere Beleuchtungselemente 50 am Temperierkörper 10 angeordnet werden. Die Beleuchtungselemente 50 können auch bei bereits an der Wand W montiertem Temperierkörper 10 sozusagen nachgerüstet und müssen nicht sozusagen ab Werk oder bei der Produktion des Temperierkörpers 10 bereits eingebaut werden.

An die Beleuchtungsprofilkörper 20 ist nämlich eine langgestreckte Beleuchtungsaufnahme 30 vorgesehen. Die Beleuchtungsaufnahme 30 erstreckt sich parallel zur Längsachse L des Beleuchtungsprofilkörpers 20 oder des Temperierkörpers 10. In die Beleuchtungsaufnahme 30 können wahlweise Beleuchtungselemente 50 oder Abdeckelemente 70 eingesteckt oder eingebracht werden. Die Montage gestaltet sich dabei äußerst leicht, da die Beleuchtungselemente 50, gegebenenfalls auch die Abdeckelemente 70, von den Stirnseiten 12 des Beleuchtungsprofilkörpers 20 in die Beleuchtungsaufnahme 30 eingesteckt werden können. Mithin bildet also die Beleuchtungsaufnahme 30 eine Steckaufnahme, deren Steckachse parallel zur Längsachse L verläuft.

Die Beleuchtungsaufnahme 30 weist einander gegenüberliegende Seitenwände 31 auf, die von der Tragwand 21 winkelig abstehen, vorliegend rechtwinkelig. Zwischen den Seitenwänden 31 erstreckt sich eine Bodenwand 32 mit einer Bodenfläche 32A, an der das Beleuchtungselement 50 abstützbar ist. An der Bodenfläche 32A sind beispielsweise Durchtrittsöffnungen 33 vorgesehen, durch die Versorgungsleitungen 60 hindurch führbar sind, um das jeweilige Beleuchtungselement 50 mit elektrischer Energie zu versorgen.

An dieser Stelle sei noch erwähnt, dass seitlich neben der Beleuchtungsaufnahme 30 Aufnahmekanäle 27 ausgebildet sind. Die Aufnahmekanäle 27 erstrecken sich beispielsweise zwischen den Seitenwänden 31 der Beleuchtungsaufnahme 30 und den Seitenschenkeln 22. Dort können elektrische Leitungen 80 oder dergleichen andere Leitungen, beispielsweise auch Datenkabel, Lichtleiter oder dergleichen, ohne weiteres verlegt werden. Mithin bildet also der Beleuchtungsprofilkörper 20 noch einen Träger für Leitungen, die nicht zur Versorgung der Beleuchtungselemente 50 dienen.

An der Bodenwand 32, mithin also der Bodenfläche 32A, ist eine Nut 35 vorgesehen. Die Nut 35 weist Seitenwände 36 auf, die schwalbenschwanzartig zueinander orientiert sind. Die Seitenwände 36 erstrecken sich von der Bodenwand 32 schräg weg zu einem Boden 37 der Nut 35. Der Boden 37 ist breiter als eine Durchtrittsöffnung 39 der Nut 35 zur Bodenwand 32 hin. Durch die Schrägneigung einer oder beider der Seitenwände 36 sind an diesen Hintergreifflächen 38 ausgebildet. An dieser Stelle sei erwähnt, dass lediglich eine der Seitenwände 36 im dem Sinne, wie in der Zeichnung dargestellt, schräg geneigt sein muss, um den nachfolgend noch beschriebenen Hintergriff des Beleuchtungselements 50 zu realisieren.

Das Beleuchtungselement 50 weist einen Grundkörper 59 auf, an dessen Frontseite 54 Leuchtmittel 53 vorgesehen sind, beispielsweise LEDs, Leuchtstoffelemente, Halogenleuchten oder sonstige Glühleuchten oder dergleichen.

Von der Frontseite 54 abgewandt ist eine Rückwand 52, die an der Bodenwand 32 der Beleuchtungsaufnahme 30 vorzugsweise flächig anliegt. Zwischen der Rückwand 52 und der Frontseite 54 erstrecken sich Seitenwände 51, die vorzugsweise flächig an den Seitenwänden 31 anliegen. Mithin liegt also das Beleuchtungselement 50 vorzugsweise formschlüssig an den Seitenwänden 31 und der Bodenwand 32 der Beleuchtungsaufnahme 30 an. Es erfährt seinen Halt bezüglich einer Kraftrichtung K zur Frontseite F des Temperierkörpers 10 durch die Hintergreifflächen 38, die einen Haltevorsprung 55 des Beleuchtungselements 50 abstützt. Der Haltevorsprung 55 steht vor die Rückwand 52 vor und weist Seitenwände 57 auf, die schräg zur Rückwand 52 verlaufen, sowie eine Stirnwand 56 zwischen den Seitenwänden 57. Die Stirnwand 56 und die Rückwand 52 verlaufen vorzugsweise parallel zueinander.

Die Seitenwände 57 sind schwalbenschwanzartig schräg geneigt. Die Seitenwände 57 weisen ebenso wie die Seitenwände 36 eine gegensinnige Schrägneigung auf. Vorzugsweise ist die Schrägneigung der Seitenwände 57 bezüglich der Rückwand 52 gleich wie die Schrägneigung der Seitenwände 36 bezüglich der Bodenwand 32. Mithin bilden also die Seitenwände 57 Hintergreifkonturen 58, also Hintergreifflächen, die in einen Hintergriff mit den Hintergreifflächen 38 gebracht werden können.

Durch diese Verschiebung lassen sich eines oder mehrere Beleuchtungselemente 50 in eine gewünschte Längsposition bezüglich der Längsachse L des Beleuchtungsprofilkörpers 20 oder Temperierkörpers 10 bringen, nämlich dort, wo Licht gebraucht wird.

Die Beleuchtungselemente 50 sind vorzugsweise in einer Reihenanordnung hintereinander angeordnet, wobei sie unmittelbar nebeneinander angeordnet sein können oder in einem Abstand zueinander. Dabei ist es möglich, dass die Beleuchtungsaufnahme 30 in einem Abstand zwischen den Beleuchtungselementen 50 frei bleibt. Es ist aber auch möglich, diese Abstände mit Abdeckelementen 70 ästhetisch ansprechend zu verschließen, was beispielsweise in den Figuren 2 und 5 angedeutet ist.

Die Beleuchtungselemente 50 sind nämlich elektrisch miteinander verknüpft, so dass die Versorgungsleitungen 60 in der Beleuchtungsaufnahme 30 verlegt werden können. Prinzipiell denkbar wäre es aber auch, dass die Versorgungsleitungen 60 durch eine oder mehrere der Durchtrittsöffnungen 33, die am Boden 37 der Nut 35 angeordnet sind, durchgeführt wird und auf der von der Beleuchtungsaufnahme 30 abgewandten Seite des Beleuchtungsprofilkörpers 20 vom einen Beleuchtungselement 50 zum anderen, in Reihenrichtung daneben angeordneten Beleuchtungselement 50 geführt werden.

Die Versorgungsleitungen 60 sind jedoch beim Ausführungsbeispiel vorteilhaft unter den Abdeckelementen 70 verborgen angeordnet.

Die Abdeckelemente 70 weisen eine Frontwand 71 sowie Seitenwände 72 auf. Die Seitenwände 72 stehen von der Frontwand 71 winkelig, vorliegend rechtwinkelig, ab. Es besteht die Möglichkeit, dass die Seitenwände 72 eine leichte Vorspannung in einem Sinne voneinander weg aufweisen, also federnd sind, so dass sie in einem Klemmsitz mit den Seitenwänden 31 der Beleuchtungsaufnahme 31 gebracht werden können.

Zwischen den Seitenwänden 72 ist eine Durchtrittsöffnung 73 definiert, in der beispielsweise eine oder mehrere Versorgungsleitungen 60 verlegt werden können. Die Durchtrittsöffnung 73 wird also quasi durch einen Innenraum definiert, den die Frontwand 71 sowie die Seitenwand 72 gegenüberliegende Bodenwand 32 der Beleuchtungsaufnahme 30 begrenzen.

Die Beleuchtungselemente 50 sind durch eine einfache elektrische Steckmontage miteinander elektrisch verbindbar. Beispielsweise weist jedes Beleuchtungselement 50 aneinander entgegengesetzten Stirnseiten des Grundkörpers 59 Anschlüsse 61 auf, insbesondere elektrische Steckanschlüsse, für eine Versorgungsleitung 60 auf. Die Versorgungsleitungen 60 können aber auch fest, d.h. unlösbar, am jeweiligen Beleuchtungselement 50 vorgesehen sein. Es ist auch möglich, dass beispielsweise die Versorgungsleitung 60 am einen Beleuchtungselement 50 fest angeordnet ist und lösbar mit dem anderen Beleuchtungselement 50 verbindbar ist, beispielsweise anhand einer elektrischen Steckverbindung. So können beispielsweise an einander entgegengesetzten Stirnseiten des Grundkörpers 59 ein Anschluss 61 und eine Versorgungsleitung 60 vorgesehen sein.

Die Darstellung gemäß Figur 5 macht deutlich, dass mehrere Temperierkörper 10 in Reihenrichtung hintereinander und/oder nebeneinander bezüglich der Längsachse L eines Temperierkörpers 10 angeordnet werden können. Somit kann eine flächige, durchgehende Seitenwand oder Decke mit mehreren Temperierkörpern 10 gestaltet werden. Die Beleuchtungsprofilkörper 20 mit ihren Beleuchtungsaufnahmen 30 ermöglichen dabei eine variable Anordnung von Beleuchtungselementen 50 und Abdeckelementen 70, so dass nicht nur eine ästhetisch ansprechende Konfiguration, sondern auch eine in technischer und praktischer Hinsicht sehr günstige individuelle Konfiguration möglich ist.

Das bereits beschriebene Hintergreif-Konzept, mit dem Beleuchtungselemente an Beleuchtungsprofilkörpern und somit Temperierkörpern durch eine einfache Steckmontage anbringbar ist, ist auch bei den nachfolgend beschriebenen Ausführungsbeispielen realisiert, allerdings mit etwas abweichenden Profilen.

Ein Beleuchtungsprofikörper 20B entspricht im Wesentlichen dem Beleuchtungsprofilkörper 20 und hat eine Tragwand 21, Seitenschenkel 22 sowie Tragschenkel 23 und Widerlagerschenkel 24. Weiterhin ist eine Beleuchtungsaufnahme 30 am Beleuchtungsprofikörper 20 vorhanden, in der eines oder mehrere Beleuchtungselemente 50B aufgenommen sind. Das Beleuchtungselement 50B entspricht dem Beleuchtungselement 50 insoweit, als es einen Grundkörper 59B aufweist, an dem ein Haltevorsprung 55B angeordnet ist. Dieser hat ähnlich wie der Haltevorsprung 55 Hintergreifkonturen 50B, die jedoch weniger tief in die Nut 35 eingreifen. Eine Stirnwand 56 des Haltevorsprungs 55 liegt somit nicht am Boden 37 der Nut 35 an, sondern hat einen Abstand dazu. Dennoch reicht eine in die Nut 35 eingreifende Länge der Hintergreifkonturen 58 aus, um das Beleuchtungselement 50B in der Kraftrichtung K zur Frontseite F hin bezüglich des Beleuchtungsprofilkörpers 20B in ausreichenden Maße abzustützen.

Ein Beleuchtungsprofilkörper 20C weist ebenso wie die Beleuchtungsprofilkörper 20, 20B eine Tragwand 21 auf, von der Seitenschenkel 22 mit Tragschenkeln 23 sowie Widerlagerschenkel 24 abstehen. Allerdings ist eine Beleuchtungsaufnahme 30C alternativ ausgestaltet. Die Beleuchtungsaufnahme 30C weist zwar die bereits beschriebene Nut 35 auf, die jedoch nicht zu einem Abstützen des Beleuchtungselements 50C in der Beleuchtungsaufnahme 30 dient. Lediglich die am Boden 37 der Nut angeordneten Durchtrittsöffnungen 33 sind beispielswiese für eine elektrische Energieversorgung des Beleuchtungselements 50C vorteilhaft. An dieser Stelle sei auch erwähnt, dass die sozusagen leere Nut 35 eine Kühlfunktion haben kann. Diese ist beispielsweise von Luft durchströmt oder durchströmbar, die zur Kühlung des Beleuchtungselements 50, 50C dient.

Weiterhin sei erwähnt, dass Durchtrittsöffnungen, insbesondere Kühlungsöffnungen oder dergleichen, auch an anderer Stelle eines Temperierkörpers oder Beleuchtungsprofilkörpers vorgesehen sein können. Exemplarisch sind beispielsweise in Figur 4 weitere Durchtrittsöffnungen 133 an der Bodenwand 32 der Beleuchtungsaufnahme 30 eingezeichnet, die beispielsweise zur Kühlung und/oder zum Durchtritt von elektrischen Versorgungsleitungen des Beleuchtungselements 50 dienen können.

Das Beleuchtungselement 50C wird in der Beleuchtungsaufnahme 30 in Bezug auf die Kraftrichtung K durch Hintergreifflächen 38C gebildet, die an den Seitenwänden 31C der Beleuchtungsaufnahme 30 angeordnet sind. Die Seitenwände 31C verlaufen prinzipiell im Sinne einer Verengung der Beleuchtungsaufnahme 30 von der Frontseite F weg, können also keinen Halt für das Beleuchtungselement 50C in Bezug auf die Kraftrichtung K darstellen. Die Seitenwände 31C haben jedoch Hintergreifflächen 38, die sich in einem Sinne voneinander weg in Richtung eines Bodens 32 der Beleuchtungsaufnahme 30C erstrecken, diese also sozusagen zum Boden 32 hin weiter wird.

An den Seitenwänden 31C liegen Seitenwände 51C des Beleuchtungselements 50 bzw. dessen Grundkörpers 59C an. Weiterhin sind an den Seitenwänden 51C Hintergreifkonturen 58C ausgebildet, die in einem Sinne voneinander weg in Richtung einer Rückwand 52 des Grundkörpers 59 geneigt sind und im Sinne einer Hintergreifens an den Hintergreifflächen 38C anliegen können. Dadurch ist das Beleuchtungselement 50C in Bezug auf die Kraftrichtung K, also zur Frontseite F hin, in der Beleuchtungsaufnahme 30C formschlüssig gehalten.

Bei einem Beleuchtungsprofilkörper 20D, der im Grundsatz dem Beleuchtungsprofilkörper 20 entspricht und somit die Schenkel 22, 23 und 24 sowie die Tragwand 21 aufweist, ist eine Beleuchtungsaufnahme 30D zum Aufnehmen eines Beleuchtungselements 50D vorgesehen. Das Beleuchtungselement 50D weist einen Grundkörper 59D auf, an dem Leuchtmittel 53 angeordnet sind. Von einer Frontseite 54 des Beleuchtungselements 50 weg erstrecken sich Hintergreifkonturen 58D an dessen Seitenwänden 51D, die formschlüssig an Hintergreifflächen 38D der Beleuchtungsaufnahme 30 anliegen. Die Hintergreifkonturen 58D bzw. die Hintergreifflächen 38D sind jeweils gegensinnig zueinander geneigt. Mithin entspricht also eine Orientierung der Schrägneigung der Hintergreifkonturen 58D und 58C einander, ebenso wie sich eine Schrägneigung der Hintergreifflächen 38D, 38C entspricht.

An der Beleuchtungsaufnahme 30D ist eine Nut 35D vorgesehen, an der in der Zeichnung nicht sichtbare Durchtrittsöffnungen 38 vorgesehen sein können. Die Nut 35D dient beispielsweise als Versorgungskanal oder Belüftungskanal für die Beleuchtungselemente 50D.

Ein Beleuchtungsprofilkörper 20E eignet sich zur Aufnahme eines Beleuchtungselements 50E oder eines Abdeckelements 70E. Das Beleuchtungselement 50E weist von seiner Frontseite 54 sich weg erstreckende Seitenflächen 51E auf, die eine Schrägneigung aufweisen. Somit bilden sie Hintergreifkonturen 58E. Die Hintergreifkonturen 58E sind in einem Sinne voneinander weg schräg geneigt, so dass sie an entsprechend komplementär schräg geneigten Seitenwänden 31E der Beleuchtungsaufnahme 30E des Beleuchtungsprofilkörpers 20E flächig und in einem Hintergriff anliegen können. Die Beleuchtungsaufnahme 30E weist die bereist erläuterte Nut 35 auf, die jedoch lediglich als Belüftungskanal oder Versorgungskanal dient.

Das Abdeckelement 70E weist eine Frontwand 71E auf, von der Seitenwände 72 schräg geneigt abstehen. Die Schrägneigung der Seitenwände 71E entspricht der Schrägneigung der Hintergreifflächen 38E, so dass auch das Abdeckelement 70E in einen Hintergriff mit der Beleuchtungsaufnahme 30E gebracht werden kann. Es ist möglich, dass die Seitenwände 72E in einem Sinne zueinander hin federnd oder nachgiebig sind, so dass das Abdeckelement 70 nicht nur von einer der Stirnseiten 72 her in die Beleuchtungsaufnahme 30 eingesteckt werden kann, sondern auch in Richtung des Pfeils F.

An dieser Stelle sie erwähnt, dass auch ein Beleuchtungselement derartig nachgiebige Seitenwände oder Rastvorsprünge aufweisen kann. So können beispielsweise die Hintergreifkonturen 58E in einem Sinne zueinander hin nachgiebig federnd sein, so dass auch das Beleuchtungselement 50E in die Beleuchtungsaufnahme 30E in Richtung des Pfeils F oder entgegen der Kraftrichtung K einsteckbar ist.

| | | | |
|---|---|---|---|
| 10 | Temperierkörper | 60 | Versorgungsleitung 50 |
| 11 | Temperierabschnitt | 61 | Anschluss 50 |
| 12 | Stirnseite | 62 | |
| 13 | | 63 | |
| 14 | | 64 | |
| 15 | | 65 | |
| 16 | | 66 | |
| 17 | | 67 | |
| 18 | | 68 | |
| 19 | | 69 | |
| 20 | Beleuchtungsprofilkörper | 70 | Abdeckelement |
| 21 | Tragwand/Stirnwand | 71 | Frontwand |
| 22 | Seitenschenkel Halteschenkel | 72 | Seitenwand |
| 23 | Tragschenkel | 73 | Durchtrittsöffnung |
| 24 | Widerlagerschenkel | 74 | |
| 25 | Befestigungshalterung für 90 | 75 | |
| 26 | Halterung für 40 | 76 | |
| 27 | Aufnahmekanal | 77 | |
| 28 | | 78 | |
| 29 | | 79 | |
| 30 | Beleuchtungsaufnahme | 80 | Elektrische Leitung |
| 31 | Seitenwand | 81 | |
| 32 | Bodenwand 32A Bodenfläche | 82 | |
| 33 | Durchtrittsöffnungen | 83 | |
| 34 | | 84 | |
| 35 | Nut | 85 | |
| 36 | Seitenwände von 35 | 86 | |
| 37 | Boden von 35 | 87 | |
| 38 | Hintergreiffläche | 88 | |
| 39 | Durchtrittsöffnung | 89 | |
| 40 | Temperierprofilkörper | 90 | Befestigungskörper |
| 41 | Tragwand | 91 | Befestigungsbasis |
| 42 | Seitenschenkel Halteschenkel | 92 | Stützvorsprünge |
| 43 | Tragschenkel | 93 | |
| 44 | Widerlagerschenkel | 94 | |
| 45 | Temperieranordnung | 95 | |
| 46 | Temperierstrang/Fluidrohre | 96 | |
| 47 | | 97 | |
| 48 | | 98 | |
| 49 | | 99 | |
| 50 | Beleuchtungselement | F | Frontseite |
| 51 | Seitenwand | K | Kraftrichtung zur Frontseite |
| 52 | Rückwand | W | Wandfläche |
| 53 | Leuchtmittel | L | Längsachse |
| 54 | Frontseite | 104 | |
| 55 | Haltevorsprung für 35 | 105 | |
| 56 | Stirnwand von 35 | 106 | |
| 57 | Seitenwände von 35 | 107 | |
| 58 | Hintergreif-Kontur Hintergreiffläche | 108 | |
| 59 | Grundkörper | 109 | |

## Patentansprüche

1. Deckenstrahlplatte, mit mindestens einem Temperierabschnitt (11) zum Temperieren einer Umgebung der Deckenstrahlplatte , insbesondere zum Temperieren eines Raumes, und mit einer Beleuchtungsaufnahme (30) zum Aufnehmen mindestens eines Beleuchtungselements (50), wobei sich die Beleuchtungsaufnahme (30) entlang einer Längsachse (L) erstreckt und zu einer Frontseite (F) der Deckenstrahlplatte offen ist, sodass das in die Beleuchtungsaufnahme (30) aufnehmbare Beleuchtungselement (50) Licht von der Frontseite (F) der Deckenstrahlplatte weg abstrahlen kann, wobei die Beleuchtungsaufnahme (30) mindestens eine Hintergreiffläche (38) zu einem Hintergriff durch eine Hintergreif-Kontur des mindestens einen Beleuchtungselements (50) aufweist, so dass das in die Beleuchtungsaufnahme (30) aufnehmbare Beleuchtungselement (50) bezüglich einer Kraftrichtung (K) zur Frontseite (F) der Deckenstrahlplatte hin in der Beleuchtungsaufnahme (30) gehalten ist, **dadurch gekennzeichnet, dass** die mindestens eine Hintergreiffläche (38) einander gegenüberliegende Hintergreifflächen (38) umfasst, wobei die einander gegenüberliegenden Hintergreifflächen (38) ausgehend von der Frontseite (F) der Beleuchtungsaufnahme (30) voneinander weg schräg geneigt sind und/oder eine Schwalbenschwanzkontur bilden und/oder gegensinnig zueinander schräg geneigt sind.

2. Deckenstrahlplatte nach Anspruch 1, **dadurch gekennzeichnet, dass** sich die mindestens eine Hintergreiffläche (38) parallel zu der Längsachse (L) erstreckt und/oder dass die mindestens eine Hintergreiffläche (38) in Bezug auf die Frontseite (F) der Deckenstrahlplatte schräg geneigt ist und/oder an einer Stufe der Beleuchtungsaufnahme (30) vorgesehen ist.

3. Deckenstrahlplatte nach einem der vorhergehenden Ansprüche, **dadurch gekennzeichnet, dass** die Beleuchtungsaufnahme (30) mindestens eine Durchtrittsöffnung (33) für eine elektrische Leitung und/oder zur Belüftung des Beleuchtungselements (50) aufweist, wobei optional die Durchtrittsöffnung (33) einen Bestandteil einer sich insbesondere parallel zur Längsachse (L) der Beleuchtungsaufnahme (30) erstreckenden Reihenanordnung von Durchtrittsöffnungen (33) bildet.

4. Deckenstrahlplatte nach einem der vorhergehenden Ansprüche, **dadurch gekennzeichnet, dass** die Beleuchtungsaufnahme (30) an mindestens einer Stirnseite (12) der Deckenstrahlplatte und/oder quer zur Frontseite (F) der Deckenstrahlplatte offen ist, sodass das Beleuchtungselement (50) von der Stirnseite (12) her oder quer zu der Frontseite (F) in die Beleuchtungsaufnahme (30) entlang der Längsachse (L) und/oder einer Steckachse einsteckbar ist.

5. Deckenstrahlplatte nach einem der vorhergehenden Ansprüche, **dadurch gekennzeichnet, dass** die Beleuchtungsaufnahme (30) sich zwischen einander entgegengesetzten Stirnseiten (12) der Deckenstrahlplatte erstreckt und an den Stirnseiten (12) zum Einstecken des mindestens einen Beleuchtungselements (50) offen ist; und/oder das Beleuchtungselement (50) in der Beleuchtungsaufnahme (30) entlang der Längsachse (L) verschieblich aufgenommen ist.

6. Deckenstrahlplatte nach einem der vorhergehenden Ansprüche, **dadurch gekennzeichnet, dass** die Beleuchtungsaufnahme (30) mindestens eine sich entlang der Längsachse (L) erstreckende Schwalbenschwanzkontur aufweist.

7. Deckenstrahlplatte nach einem der vorhergehenden Ansprüche, **dadurch gekennzeichnet, dass** die Beleuchtungsaufnahme (30) einander gegenüberliegende, parallel zur Längsachse (L) verlaufende Seitenwände (36), insbesondere zum formschlüssigen Halten des mindestens einen Beleuchtungselements (50), aufweist, wobei optional mindestens eine der Seitenwände (36) als Hintergreiffläche (38) ausgestaltet ist oder eine Hintergreiffläche (38) aufweist.

8. Deckenstrahlplatte nach einem der vorhergehenden Ansprüche, **dadurch gekennzeichnet, dass** die Beleuchtungsaufnahme (30) eine Bodenfläche (32A) aufweist, an der mindestens eine insbesondere parallel zu der Längsachse (L) verlaufende Nut (35) angeordnet ist, wobei die Nut vorzugsweise mindestens eine Durchtrittsöffnung (33) für eine elektrische Leitung und/oder zur Belüftung des mindestens einen Beleuchtungselements (50) und/oder die oder eine Hintergreiffläche (38) aufweist.

9. Deckenstrahlplatte nach einem der vorhergehenden Ansprüche, **dadurch gekennzeichnet, dass** die Beleuchtungsaufnahme (30) an einem Beleuchtungsprofilkörper (20) angeordnet ist, der mit mindestens einem Temperierprofilkörper (40) verbunden ist, an dem der Temperierabschnitt (11) ganz oder teilweise vorgesehen ist und der einen Träger für eine insbesondere Fluidkanäle oder Temperierstränge (46), z.B. Fluidrohre, umfassende Temperieranordnung (45) bildet, wobei optional der Beleuchtungsprofilkörper (20) mindestens eine, insbesondere sich entlang der Längsachse (L) erstreckende, Halterung (26), insbesondere eine Halteaufnahme oder einen Haltevorsprung, für den Temperierprofilkörper (40) aufweist.

10. Deckenstrahlplatte nach Anspruch 9, **dadurch gekennzeichnet, dass** an dem Beleuchtungsprofilkörper (20) zwischen der Halterung (26) und der Beleuchtungsaufnahme (30) ein sich insbesondere parallel zur Längsachse (L) erstreckender Aufnahmekanal (26) zur Aufnahme mindestens einer insbesondere elektrischen Leitung ausgebildet ist.

11. Deckenstrahlplatte nach einem der vorhergehenden Ansprüche, **dadurch gekennzeichnet, dass** sie mindestens ein an der Beleuchtungsaufnahme (30) lösbar gehaltenes Abdeckelement (70) zur Abdeckung zumindest eines Teilabschnitts der Beleuchtungsaufnahme (30) aufweist, wobei das Abdeckelement (70) vorzugsweise eine parallel zur Längsachse (L) der Beleuchtungsaufnahme (30) verlaufende Durchtrittsöffnung (73) für eine elektrische Versorgungsleitung (60) zur Versorgung des mindestens einen Beleuchtungselements (50) aufweist und/oder einen Träger für eine elektrische Versorgungsleitung (60) zur Versorgung des mindestens einen Beleuchtungselements (50) bildet.

12. Deckenstrahlplatte nach Anspruch 11, **dadurch gekennzeichnet, dass** das Abdeckelement (70) mindestens eine Klemmkontur zum Verklemmen mit der Beleuchtungsaufnahme (30) und/oder mindestens eine Hintergreif-Kontur zum Hintergreifen der mindestens einen Hintergreiffläche (38) aufweist.

13. Verwendung eines Beleuchtungselements (50) mit einer Deckenstrahlplatte nach einem der vorhergehenden Ansprüche, wobei das Beleuchtungselement (50) mindestens ein Leuchtmittel (53) sowie mindestens eine Hintergreif-Kontur zum Hintergreifen der mindestens einen Hintergreiffläche (38) der Beleuchtungsaufnahme (30) aufweist, wobei optional das Beleuchtungselement (50) einen Grundkörper (59) aufweist, an dem die Hintergreif-Kontur unbeweglich angeordnet ist und/oder dass die Hintergreif-Kontur an einem Rastkörper zum Verrasten mit der Hintergreiffläche (38) vorgesehen ist und/oder dass es mindestens eine Klemmkontur zum Verklemmen mit der Beleuchtungsaufnahme (30) aufweist.

14. System umfassend eine Deckenstrahlplatte nach einem der Ansprüche 1 bis 12 und mindestens ein Beleuchtungselement (50), welches mindestens ein Leuchtmittel (53) sowie mindestens eine Hintergreif-Kontur zum Hintergreifen der mindestens einen Hintergreiffläche (38) der Beleuchtungsaufnahme (30) aufweist, wobei optional das Beleuchtungselement (50) einen Grundkörper (59) aufweist, an dem die Hintergreif-Kontur unbeweglich angeordnet ist und/oder die Hintergreif-Kontur an einem Rastkörper zum Verrasten mit der Hintergreiffläche (38) vorgesehen ist und/oder es mindestens eine Klemmkontur zum Verklemmen mit der Beleuchtungsaufnahme (30) aufweist.

## Claims

1. Radiant ceiling panel, having at least one temperature control section (11) for controlling the temperature of an environment of the radiant ceiling panel, in particular for controlling the temperature of a room, and having an illumination receptacle (30) for accommodating at least one illumination element (50), the illumination receptacle (30) extending along a longitudinal axis (L) and being open towards a front side (F) of the radiant ceiling panel, such that the illumination element (50) receivable in the illumination receptacle (30) can radiate light away from the front face (F) of the radiant ceiling panel, the illumination receptacle (30) having at least one undercut surface (38) for rear gripping by an undercut contour of the at least one illumination element (50), such that the illumination element (50) receivable in the illumination receptacle (30) is held in the illumination receptacle (30) with respect to a direction of force (K) toward the front side (F) of the radiant ceiling panel, **characterized in that** the at least one undercut surface (38) comprises mutually opposite undercut surfaces (38), wherein the mutually opposing undercut surfaces (38), starting from the front side (F) of the illumination receptacle (30), are inclined obliquely away from one another and/or form a dovetail contour and/or are inclined obliquely in opposite directions to one another.

2. Radiant ceiling panel according to claim 1, **characterized in that** said at least one undercut surface (38) extends parallel to said longitudinal axis (L) and/or that said at least one undercut surface (38) is inclined obliquely with respect to the front side (F) of the ceiling radiant panel and/or is provided at a step of the illumination receptacle (30).

3. Radiant ceiling panel according to one of the preceding claims, **characterized in that** the illumination receptacle (30) has at least one passage opening (33) for an electrical line and/or for ventilation of the illumination element (50), optionally the passage opening (33) forming part of a row arrangement of passage openings (33) extending in particular parallel to the longitudinal axis (L) of the illumination receptacle (30).

4. Radiant ceiling panel according to one of the preceding claims, **characterized in that** the illumination receptacle (30) is open at at least one end face (12) of the radiant ceiling panel and/or transversely to the front face (F) of the ceiling-mounted radiant panel, so that the illumination element (50) can be inserted from the end face (12) or transversely to the front face (F) into the illumination receptacle (30) along the longitudinal axis (L) and/or an insertion axis.

5. Radiant ceiling panel according to any one of the preceding claims, **characterized in that** the illumination receptacle (30) extends between opposite end faces (12) of the radiant ceiling panel and is open at the end faces (12) for insertion of the at least one illumination element (50); and/or the illumination element (50) is slidably received in the illumination receptacle (30) along the longitudinal axis (L).

6. Radiant ceiling panel according to any one of the preceding claims, **characterized in that** the illumination receptacle (30) has at least one dovetail contour extending along the longitudinal axis (L).

7. Radiant ceiling panel according to one of the preceding claims, **characterized in that** the illumination receptacle (30) has mutually opposite side walls (36) running parallel to the longitudinal axis (L), in particular for holding the at least one illumination element (50) in a form-fitting manner, optionally at least one of the side walls (36) being designed as an undercut surface (38) or having an undercut surface (38).

8. Radiant ceiling panel according to one of the preceding claims, **characterized in that** the illumination receptacle (30) has a bottom surface (32A) on which at least one groove (35) running in particular parallel to the longitudinal axis (L) is arranged, the groove preferably having at least one passage opening (33) for an electrical line and/or for ventilation of the at least one illumination element (50) and/or the or an undercut surface (38).

9. Radiant ceiling panel according to one of the preceding claims, **characterized in that** the illumination receptacle (30) is arranged on an illumination profile body (20) which is connected to at least one temperature control profile body (40) on which the temperature control section (11) is provided in whole or in part and which forms a support for a temperature control arrangement (45) comprising, in particular, fluid channels or temperature control strands (46), for example fluid tubes, wherein optionally the illumination profile body (20) has at least one holder (26), in particular a holding receptacle or a holding projection, extending in particular along the longitudinal axis (L), for the temperature control profile body (40).

10. Radiant ceiling panel according to claim 9, **characterized in that** a receiving channel (26) extending in particular parallel to the longitudinal axis (L) for receiving at least one in particular electrical line is formed on the lighting profile body (20) between the holder (26) and the lighting receptacle (30).

11. Radiant ceiling panel according to one of the preceding claims, **characterized in that** it has at least one cover element (70) detachably held on the illumination receptacle (30) for covering at least a partial section of the illumination receptacle (30), wherein the cover element (70) preferably has a passage opening (73), running parallel to the longitudinal axis (L) of the illumination receptacle (30), for an electrical supply line (60) for supplying the at least one illumination element (50) and/or forms a support for an electrical supply line (60) for supplying the at least one illumination element (50).

12. Radiant ceiling panel of claim 11, **characterized in that** the cover member (70) includes at least one clamping contour for clamping to the illumination receptacle (30) and/or at least one undercut contour for rear-engaging the at least one undercut surface (38).

13. Use of a lighting element (50) with a radiant ceiling panel according to one of the preceding claims, wherein the lighting element (50) comprises at least one illuminant (53) as well as at least one undercut contour for rear-engaging the at least one undercut surface (38) of the lighting receptacle (30), wherein optionally the illumination element (50) comprises a base body (59) on which the undercut contour is immovably arranged and/or that the undercut contour is provided on a latching body for latching with the undercut surface (38) and/or that it comprises at least one clamping contour for clamping with the illumination receptacle (30).

14. A system comprising a radiant ceiling panel according to any one of claims 1 to 12 and at least one illumination element (50) comprising at least one illuminant (53) and at least one undercut contour for rear-engaging the at least one undercut surface (38) of the illumination receptacle (30), wherein optionally the illumination element (50) has a base body (59) on which the undercut contour is arranged immovably and/or the undercut contour is provided on a latching body for latching with the undercut surface (38) and/or it has at least one clamping contour for clamping with the illumination receptacle (30).

## Revendications

1. Panneau rayonnant de plafond, avec au moins une section de régulation de température (11) pour réguler la température d'un environnement du panneau rayonnant de plafond, en particulier pour réguler la température d'une pièce, et avec un logement d'éclairage (30) pour recevoir au moins un élément d'éclairage (50), le logement d'éclairage (30) s'étendant le long d'un axe longitudinal (L) et étant ouvert vers un côté frontal (F) du panneau rayonnant de plafond, de sorte que l'élément d'éclairage (50) pouvant être reçu dans le logement d'éclairage (30) peut émettre de la lumière à partir de la face avant (F) du panneau rayonnant de plafond, le logement d'éclairage (30) présentant au moins une surface de préhension arrière (38) pour une préhension arrière par un contour de préhension arrière du au moins un élément d'éclairage (50), de sorte que l'élément d'éclairage (50) pouvant être reçu dans le logement d'éclairage (30) est maintenu dans le logement d'éclairage (30) par rapport à une direction de force (K) vers le côté avant (F) du panneau rayonnant de plafond, **caractérisé en ce que** la au moins une surface de préhension arrière (38) comprend des surfaces de préhension arrière (38) opposées les unes aux autres, les surfaces de préhension arrière (38) opposées les unes aux autres étant inclinées en s'éloignant les unes des autres à partir de la face avant (F) du logement d'éclairage (30) et/ou formant un contour en queue d'aronde et/ou étant inclinées en sens inverse les unes des autres.

2. Panneau rayonnant de plafond selon la revendication 1, **caractérisé en ce que** la au moins une surface de préhension arrière (38) s'étend parallèlement à l'axe longitudinal (L) et/ou **en ce que** la au moins une surface de préhension arrière (38) est inclinée par rapport à la face avant (F) du panneau rayonnant de plafond et/ou est prévue sur un gradin du logement d'éclairage (30).

3. Panneau rayonnant de plafond selon l'une des revendications précédentes, **caractérisé en ce que** le logement d'éclairage (30) présente au moins une ouverture de passage (33) pour une ligne électrique et/ou pour la ventilation de l'élément d'éclairage (50), l'ouverture de passage (33) formant en option un élément d'un agencement en série d'ouvertures de passage (33) s'étendant en particulier parallèlement à l'axe longitudinal (L) du logement d'éclairage (30).

4. Panneau rayonnant de plafond selon l'une des revendications précédentes, **caractérisé en ce que** le logement d'éclairage (30) est ouvert sur au moins une face frontale (12) du panneau rayonnant de plafond et/ou transversalement à la face frontale (F) du panneau rayonnant de plafond, de sorte que l'élément d'éclairage (50) peut être inséré dans le logement d'éclairage (30) depuis la face frontale (12) ou transversalement à la face frontale (F) le long de l'axe longitudinal (L) et/ou d'un axe d'insertion.

5. Panneau rayonnant de plafond selon l'une des revendications précédentes, **caractérisé en ce que** le logement d'éclairage (30) s'étend entre des faces frontales (12) opposées l'une à l'autre du panneau rayonnant de plafond et est ouvert au niveau des faces frontales (12) pour l'insertion d'au moins un élément d'éclairage (50) ; et/ou l'élément d'éclairage (50) est logé dans le logement d'éclairage (30) de manière à pouvoir se déplacer le long de l'axe longitudinal (L).

6. Panneau rayonnant de plafond selon l'une des revendications précédentes, **caractérisé en ce que** le logement d'éclairage (30) présente au moins un contour en queue d'aronde s'étendant le long de l'axe longitudinal (L).

7. Panneau rayonnant de plafond selon l'une des revendications précédentes, **caractérisé en ce que** le logement d'éclairage (30) présente des parois latérales (36) opposées l'une à l'autre et s'étendant parallèlement à l'axe longitudinal (L), en particulier pour le maintien par complémentarité de forme d'au moins un élément d'éclairage (50), au moins l'une des parois latérales (36) étant en option configurée comme surface de préhension arrière (38) ou présentant une surface de préhension arrière (38).

8. Panneau rayonnant de plafond selon l'une des revendications précédentes, **caractérisé en ce que** le logement d'éclairage (30) présente une surface de fond (32A) sur laquelle est disposée au moins une rainure (35) s'étendant en particulier parallèlement à l'axe longitudinal (L), la rainure présentant de préférence au moins une ouverture de passage (33) pour une ligne électrique et/ou pour la ventilation de l'au moins un élément d'éclairage (50) et/ou la ou une surface de préhension arrière (38).

9. Panneau rayonnant de plafond selon l'une des revendications précédentes, **caractérisé en ce que** le logement d'éclairage (30) est disposé sur un corps profilé d'éclairage (20) qui est relié à au moins un corps profilé de thermorégulation (40) sur lequel la section de thermorégulation (11) est prévue entièrement ou partiellement et qui constitue un support pour un système de thermorégulation, en particulier des canaux de fluide ou des cordons de thermorégulation (46), par exemple des tubes de fluide, le corps profilé d'éclairage (20) présentant en option au moins un support (26), en particulier un logement de maintien ou une saillie de maintien, s'étendant en particulier le long de l'axe longitudinal (L), pour le corps profilé d'équilibrage de température (40).

10. Panneau rayonnant de plafond selon la revendication 9, **caractérisé en ce qu'**un canal de réception (26) s'étendant en particulier parallèlement à l'axe longitudinal (L) est formé sur le corps profilé d'éclairage (20) entre le support (26) et le logement d'éclairage (30) pour recevoir au moins un câble en particulier électrique.

11. Panneau rayonnant de plafond selon l'une des revendications précédentes, **caractérisé en ce qu'**il présente au moins un élément de recouvrement (70) maintenu de manière amovible sur le logement d'éclairage (30) pour recouvrir au moins une section partielle du logement d'éclairage (30), l'élément de recouvrement (70) présentant de préférence une ouverture de passage (73) s'étendant parallèlement à l'axe longitudinal (L) du logement d'éclairage (30) pour une ligne d'alimentation électrique (60) destinée à alimenter le au moins un élément d'éclairage (50) et/ou formant un support pour une ligne d'alimentation électrique (60) destinée à alimenter le au moins un élément d'éclairage (50).

12. Panneau rayonnant de plafond selon la revendication 11, **caractérisé en ce que** l'élément de recouvrement (70) présente au moins un contour de serrage pour le serrage avec le logement d'éclairage (30) et/ou au moins un contour de prise arrière pour la prise arrière de la au moins une surface de préhension arrière (38).

13. Utilisation d'un élément d'éclairage (50) avec un panneau rayonnant de plafond selon l'une des revendications précédentes, l'élément d'éclairage (50) présentant au moins un moyen d'éclairage (53) ainsi qu'au moins un contour de prise arrière pour la prise arrière de la au moins une surface de préhension arrière (38) du logement d'éclairage (30), dans lequel, en option, l'élément d'éclairage (50) présente un corps de base (59) sur lequel le contour de prise arrière est disposé de manière immobile et/ou en ce que le contour de prise arrière est prévu sur un corps d'encliquetage pour l'encliquetage avec la surface de préhension arrière (38) et/ou en ce qu'il présente au moins un contour de serrage pour le serrage avec le logement d'éclairage (30).

14. Système comprenant un panneau rayonnant de plafond selon l'une des revendications 1 à 12 et au moins un élément d'éclairage (50) qui présente au moins un moyen d'éclairage (53) ainsi qu'au moins un contour de saisie par l'arrière pour saisir par l'arrière la au moins une surface de préhension arrière (38) du logement d'éclairage (30), l'élément d'éclairage (50) présentant en option un corps de base (59) sur lequel le contour de prise arrière est disposé de manière immobile et/ou le contour de prise arrière étant prévu sur un corps d'encliquetage pour l'encliquetage avec la surface de préhension arrière (38) et/ou il présente au moins un contour de serrage pour le serrage avec le logement d'éclairage (30).
